# FASCICULE DE BREVET EUROPEEN

(11) **EP 0 673 796 B1**
(45) Date de publication et mention de la délivrance du brevet: **19.05.1999**
(21) Numéro de dépôt: 95400661.5
(22) Date de dépôt: 24.03.1995
(51) Int. Cl.: B60H 1/24

(54) **Installation de chauffage-ventilation et/ou de climatisation de l'habitacle d'un véhicule**
Vorrichtung für die Heizung, Lüftung und/oder Klimatisierung eines Fahrzeuginnenraumes
Device for heating, ventilation and/or air conditioning the interior of a vehicle

(30) Priorité: 24.03.1994 FR 9403494
(43) Date de publication de la demande: 27.09.1995
(73) Titulaire: RENAULT, 92109 Boulogne-Billancourt (FR); VALEO THERMIQUE HABITACLE, 78320 Le Mesnil-Saint-Denis (FR)
(72) Inventeur: Urset, Charles, F-95610 Eragny-sur-Oise (FR); Salmon, Michel, F-95540 Mery-sur-Oise (FR); Pommier, Didier, F-28130 Maintenon (FR)
(74) Mandataire: Ernst-Schonberg, Michel

(56) Documents cités:
- EP-A- 0 563 807
- US-A- 2 722 106
- US-A- 3 218 820
- US-A- 3 218 821
- US-A- 3 996 762
- US-A- 5 222 372

## Description

L'invention concerne une installation de chauffage-ventilation et/ou de climatisation de l'habitacle d'un véhicule, en particulier du type "monocorps" ou "monospace".

Les installations connues de ce type comprennent des moyens de traitement propres à produire de l'air traité -chaud ou climatisé- et des conduits reliant les moyens de traitement à des bouches de distribution réparties dans l'habitacle.

De façon connue, ces moyens de traitement comprennent une entrée d'air propre à être alimentée en air extérieur ou en air recirculé, un pulseur propre à envoyer cet air au travers d'un radiateur, ainsi qu'une ou plusieurs sorties reliées aux conduits de distribution.

Le plus souvent, ces moyens de traitement comprennent en outre un évaporateur faisant partie d'un circuit de climatisation, cet évaporateur étant placé entre le pulseur et le radiateur de chauffage.

Dans les installations connues, ces moyens de traitement sont disposés soit sous la planche de bord à l'intérieur de l'habitacle, soit partiellement dans le compartiment moteur. Une telle installation est connue par exemple de US-A-5 222 372.

Pour les véhicules avec un habitacle de volume important, comme c'est souvent le cas pour ceux du type "monocorps" ou "monospace", il peut être prévu des moyens de traitement d'air supplémentaires placés à l'arrière du véhicule, soit dans le coffre, soit sous le plafond.

Un inconvénient principal des installations connues réside dans le fait que les moyens de traitement occupent un volume non négligeable, soit sous la planche de bord, soit dans le compartiment moteur.

En outre, ces installations connues ont pour inconvénient que les moyens de traitement sont difficiles d'accès, ce qui augmente le temps et le coût des réparations lorsqu'une intervention est nécessaire.

L'invention a pour buts principaux de surmonter les inconvénients précités.

Elle propose à cet effet une installation de chauffage-ventilation et/ou de climatisation du type défini en introduction, dans laquelle les moyens de traitement comprennent au moins un boîtier amovible monté, soit verticalement par le dessous du plancher du vehicule, soit horizontalement par le coté à la manière d'un tiroir et comportant des moyens de fixation rapide, ledit boitier amovible contenant une entrée d'air, un radiateur de chauffage, un évaporateur éventuel et au moins une sortie d'air.

Il en résulte que l'invention permet de libérer le volume utilisé traditionnellement par les moyens de traitement, soit sous la planche de bord, soit en partie dans le compartiment moteur, et de rendre ce volume disponible pour d'autres fonctions.

L'invention a en outre pour avantage de regrouper l'ensemble des moyens de traitement dans au moins un boîtier amovible qui peut être livré prêt à l'emploi au constructeur.

Il en résulte que le montage sur le véhicule est aisé et rapide.

Par ailleurs, en cas d'intervention, il est facile de démonter le boîtier pour le réparer et le remettre en place, ou éventuellement le remplacer par un autre boîtier.

Dans une forme de réalisation préférentielle, l'installation comprend deux boîtiers amovibles disposés respectivement du côté droit et du côté gauche du véhicule et assurant l'envoi d'air traité respectivement dans la partie droite et dans la partie gauche de l'habitacle.

Dans ce cas, les deux boîtiers sont avantageusement placés dans des positions symétriques de part et d'autre de l'axe longitudinal du véhicule.

Ceci facilite le raccordement de chacun des boîtiers aux conduites de distribution d'air.

Avantageusement, les entrées d'air respectives des deux boîtiers sont reliées à une conduite d'admission commune propre à être alimentée en air extérieur ou en air recirculé.

Cette conduite d'admission commune peut, le cas échéant, loger un filtre.

Lorsque les moyens de traitement d'air comprennent un évaporateur, celui-ci fait partie d'un circuit de réfrigération classique comportant en outre un compresseur, un condenseur et un détendeur.

De façon avantageuse, ce circuit de réfrigération est également logé dans le boîtier.

Dans une variante, il est possible que les éléments du circuit soient extérieurs au boîtier, des moyens de connexion rapide étant alors prévus pour relier l'évaporateur aux autres éléments du circuit de réfrigération.

Pour faciliter le montage et le démontage du ou de chaque boîtier, l'entrée d'air du boîtier est munie d'un raccord rapide pour son raccordement à une conduite d'admission d'air et la(les) sortie(s) d'air du boîtier est(sont) munie(s) chacune d'un raccord rapide pour son(leur) raccordement aux conduits de distribution.

Ces raccords rapides facilitent le montage et le démontage du boîtier et diminuent en même temps les temps de montage ou de démontage.

Dans une forme de réalisation préférée de l'invention, les conduites de distribution de l'installation sont constituées au moins en partie par des éléments creux de l'ossature du véhicule, qui comprennent notamment des longerons creux.

Dans une forme de réalisation préférée de l'invention où les moyens de traitement d'air comprennent deux boîtiers amovibles, chacun des boîtiers peut être situé à proximité immédiate d'un longeron creux disposé au niveau du plancher.

On peut ainsi prévoir que le ou chaque boîtier comporte une seule sortie d'air reliée à un longeron creux de l'ossature.

Dans une autre variante, le ou chaque boîtier des moyens de traitement d'air comprend deux sorties d'air, l'une reliée à un longeron creux de l'ossature, et l'autre reliée à une conduite se raccordant à des bouches de distribution placées sur la planche de bord.

Dans la description qui suit, faite seulement à titre d'exemple, on se réfère aux dessins annexés, sur lesquels :
- la figure 1 est une vue schématique en coupe verticale et longitudinale d'un véhicule équipé d'une installation selon l'invention;
- la figure 2 est une représentation schématique de dessus du véhicule de la figure 1;
- la figure 3 est une vue en coupe schématique selon la ligne III-III de la figure 2;
- la figure 4 est une vue schématique partielle des moyens de traitement d'air et d'une partie des conduites de distribution de l'installation équipant le véhicule des figures 1 à 3;
- la figure 5 est une vue en coupe longitudinale partielle d'un autre véhicule équipé d'une installation selon l'invention dans une variante de réalisation; et
- la figure 6 est une vue partielle de dessus d'une partie des moyens de traitement de l'installation du dispositif du véhicule de la figure 5.

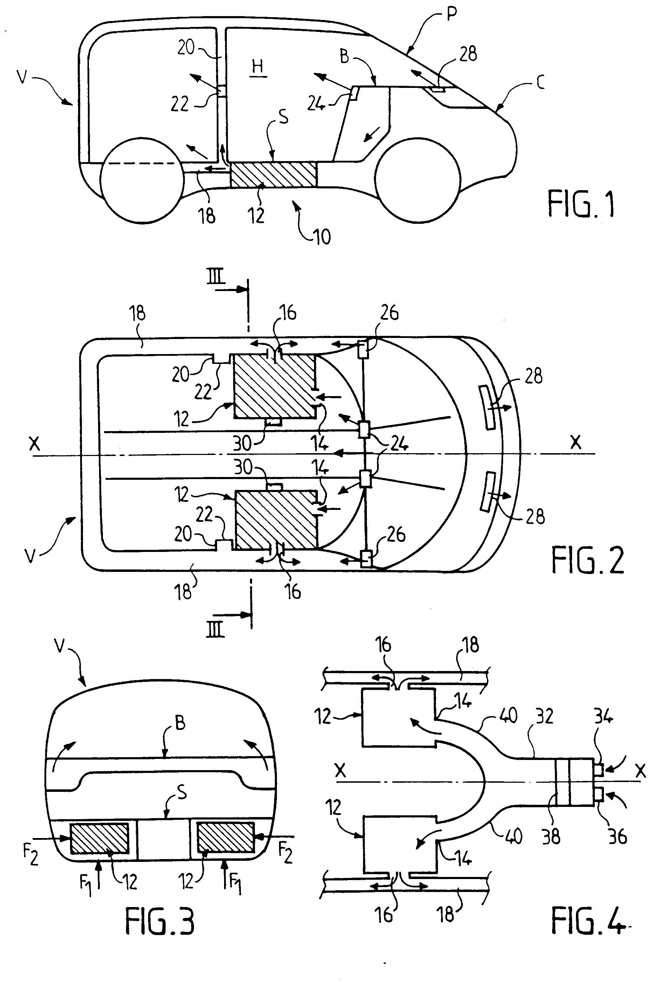

On se réfère tout d'abord aux figures 1 à 3 qui représentent un véhicule V, du type "monocorps" ou "monospace", comprenant un habitacle H de grand volume. Le véhicule V possède un pare-brise P situé sensiblement dans le prolongement du capot moteur C, ainsi qu'une planche de bord B de grandes dimensions.

Le véhicule V est équipé d'une installation de chauffage-climatisation désignée dans son ensemble par la référence 10.

L'installation 10 comprend deux boîtiers amovibles 12 propres à être implantés sous le plancher de sol S du véhicule V, respectivement du côté droit et du côté gauche du véhicule dans deux positions symétriques par rapport à son axe longitudinal médian XX (figure 2).

Les deux boîtiers 12 contiennent des moyens de traitement propres à produire de l'air chaud ou climatisé, qui seront décrits plus loin. Les boîtiers 12 sont prévus pour envoyer de l'air chaud ou climatisé respectivement dans la partie droite et la partie gauche de l'habitacle H.

Les boîtiers 12 comprennent deux entrées d'air respectives 14 (figure 2 et figure 4) propres à être alimentées chacune en air extérieur ou en air recirculé provenant de l'habitacle H.

En outre , les boîtiers 12 comprennent des sorties d'air respectives 16 propres à envoyer l'air chaud ou climatisé dans des conduites de distribution menant à des bouches de distribution.

Dans l'exemple représenté, les sorties d'air 16 débouchent respectivement dans deux longerons creux 18 qui font partie de l'ossature du véhicule. Les longerons creux 18 communiquent respectivement avec deux montants creux 20 (figure 2) sur lesquels sont montées respectivement deux bouches de distribution 22 propres à envoyer de l'air à l'intérieur de l'habitacle.

Les longerons 18 permettent également d'acheminer de l'air traité vers deux bouches 24 placées dans la région centrale de la planche de bord B, vers deux bouches 26 prévues latéralement sur la planche de bord B et vers deux bouches de distribution 28 prévues près du pare-brise pour assurer son désembuage ou dégivrage.

Comme on le voit sur la figure 3, les deux boîtiers 12 peuvent être implantés soit par le dessous par un déplacement vertical dans le sens des flèches F1, soit encore latéralement à la manière d'un tiroir par déplacement horizontal dans le sens des flèches F2.

Les boîtiers 12 comprennent chacun des moyens de fixation rapide 30 représentés schématiquement à la figure 2.

Comme on peut le voir sur la figure 4, les entrées 14 des boîtiers 12 sont raccordées à une conduite d'admission commune 32 propre à être alimentée en air extérieur par une entrée 34 ou en air recirculé par une entrée 36. La conduite d'admission commune 32 est munie d'un filtre intérieur 38 et elle se partage en deux conduites 40 qui sont reliées respectivement aux deux entrées 14.

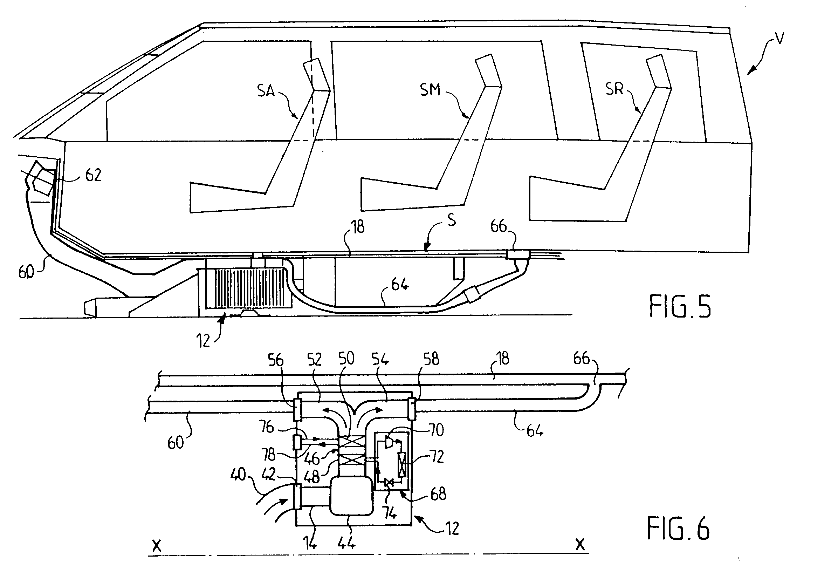

Dans la forme de réalisation des figures 5 et 6, auxquelles on se réfère maintenant, le véhicule V, également du type "monocorps" ou "monospace", est muni aussi de deux boîtiers disposés symétriquement de part et d'autre de l'axe longitudinal médian XX. Dans l'exemple, le véhicule V comporte trois rangées de sièges : des sièges avant SA, des sièges médians SM et des sièges arrière SR. Les deux boîtiers 12 sont implantés sous le plancher S et dans la région des sièges avant SA.

L'entrée d'air 14 du boîtier 12 (figure 6) est reliée à la conduite d'admission d'air 40 par un raccord rapide 42. L'entrée d'air 14 alimente un pulseur 44 dont la sortie est reliée à un boîtier 46 contenant un évaporateur 48 et un radiateur de chauffage 50. L'air envoyé par le pulseur 44 traverse ainsi successivement l'évaporateur 48 et le radiateur de chauffage 50. Il est ensuite partagé entre deux conduites de sortie 52 et 54 munies respectivement de deux raccords rapides 56 et 58. La conduite 52 peut être reliée, par le raccord rapide 56, à une conduite 60 menant à des bouches de distribution 62 placées au niveau de la planche de bord.

La conduite 54 peut être reliée, par un raccord rapide 58, à une conduite 64 dont la sortie 66 débouche dans le longeron 18 adjacent.

Le longeron 18 peut alimenter différentes bouches de distribution situées par exemple sur des montants creux communiquant avec le longeron 18 ou sur des bouches situées au niveau du sol et communiquant avec le montant creux par des traverses (non représentées).

Ainsi, dans la forme de réalisation des figures 5 et 6, l'installation 10 comprend également deux boîtiers 12 contenant des moyens de traitement d'air pour envoyer de l'air traité respectivement dans la partie droite et dans la partie gauche de l'habitacle.

L'évaporateur 48 est relié à un circuit de réfrigération 68 de structure classique qui est également contenu dans le boîtier 12. Ce circuit 68 comprend un compresseur 70, un condenseur 72 et un détendeur 74. L'évaporateur 48 est interposé entre le détendeur 74 et le compresseur 70.

Dans une variante (non représentée), il serait possible d'avoir un circuit réfrigérant commun aux deux boîtiers 12 et situé à l'extérieur de ceux-ci. Dans ce cas, le circuit réfrigérant pourrait être raccordé aux deux boîtiers 12 par des raccords rapides appropriés.

Le radiateur 50 est relié à deux tubulures 76, 78 servant respectivement à amener ou évacuer un fluide caloporteur, par exemple le fluide de refroidissement du moteur du véhicule. Les deux tubulures 76 et 78 sont reliées à un raccord rapide commun.

En variante, il serait possible de remplacer le radiateur 50 par un radiateur électrique.

L'installation de l'invention permet ainsi de libérer le volume traditionnellement occupé sous la planche de bord ou dans le compartiment moteur par les moyens de traitement classiques.

L'installation de l'invention facilite la distribution de l'air du fait que les moyens de traitement sont situés plus au centre sur le véhicule et qu'il est possible en outre d'utiliser les structures creuses du véhicule pour la distribution de l'air vers les bouches de distribution.

Par ailleurs, en disposant les éléments des circuits de réfrigération dans le ou chaque boîtier, on libère du volume dans le compartiment moteur.

De façon générale, l'utilisation d'un ou plusieurs boîtiers permet de livrer un ensemble compact au constructeur, qui n'a plus qu'à monter les boîtiers sur les véhicules sur les chaînes de montage.

L'accostage du boîtier sur la structure du véhicule est plus facile et sa fixation peut être faite rapidement, notamment grâce à l'utilisation de raccords rapides.

Non seulement le montage sur véhicule est plus aisé et plus rapide, mais aussi l'entretien s'en trouve facilité.

Il est également à noter que le confort de l'utilisateur du véhicule est amélioré, grâce à une meilleure répartition de la distribution d'air et à un meilleur amortissement des bruits du fait que les moyens de traitement d'air sont placés sous le plancher.

## Revendications

1. Installation de chauffage-climatisation de l'habitacle d'un véhicule, comprenant des moyens de traitement propres à produire de l'air traité - chaud ou climatisé- et des conduits reliès aux moyens de traitement pour acheminer l'air traité à des bouches de distribution réparties dans l'habitacle, caractérisée en ce que les moyens de traitement comprennent au moins un boîtier amovible (12) monté, soit verticalement par le dessous du plancher (S) du vehicule, soit horizontalement par le coté à la manière d'un tiroir et comportant des moyens de fixation rapide (30), ledit boitier amovible (12) contenant une entrée d'air (14), un évaporateur éventuel (48), un radiateur de chauffage (50) et au moins une sortie d'air (16, 52, 54).

2. Installation selon la revendication 1, caractérisée en ce qu'elle comprend deux boîtiers amovibles (12) disposés respectivement du coté droit et du coté gauche du véhicule (V) et assurant l'envoi d'air traité respectivement dans la partie droite et dans la partie gauche de l' habitacle (H).

3. Installation selon la revendication 2, caractérisée en ce que les entrées d'air respectives (16) des deux boîtiers (12) sont reliées à une conduite d'admission commune (32) propre à être alimentée en air extérieur ou en air recirculé.

4. Installation selon l'une des revendications 1 à 3, caractérisée en ce que l'évaporateur (48) du boîtier (12) est relié à un circuit de réfrigération (68) logé également dans le boîtier (12).

5. Installation selon l'une des revendications 1 à 4, caractérisée en ce que l'entrée d'air (14) du boîtier (12) est munie d'un raccord rapide (42) pour son raccordement à une conduite d'admission d'air (40) et en ce que la ou les sorties d'air (52, 54) est(sont) munie(s) chacune d'un raccord rapide (56, 58) pour son(leur) raccordement aux conduites de distribution (60, 64).

6. Installation selon l'une des revendications 1 à 5, caractérisée en ce que les conduites de distribution sont constituées au moins en partie par des éléments creux de l'ossature du véhicule (V), qui comprennent notamment des longerons (18).

7. Installation selon la revendication 6, caractérisé en ce que le boîtier (12) des moyens de traitement d'air comprend une seule sortie d'air (16) reliée à un longeron (18).

8. Installation selon la revendication 6, caractérisée en ce que le boîtier (12) des moyens de traitement d'air comprend deux sorties d'air (52, 54), l'une (52) reliée à une conduite (60) menant à des bouches de distribution (62) placées sur la planche de bord (B), et l'autre (54) menant à une conduite (64) reliée à un longeron (18).

## Claims

1. A heating-air conditioning installation for the passenger space of a vehicle, comprising treatment means adapted to produce treated - hot or conditioned - air and ducts connected to the treatment means in order to supply the treated air to distribution outlets throughout the passenger space, characterised in that the treatment means comprise at least one removable housing (12) mounted either vertically underneath the floor (S) of the vehicle, or horizontally at the side in the manner of a drawer and comprising rapid fastening means (30), this removable housing (12) containing an air inlet (14), possibly an evaporator (48), a heating radiator (50) and at least one air outlet (16, 52, 54).

2. An installation as claimed in claim 1, characterised in that it comprises two removable housings (12) disposed on the right-hand and left-hand side respectively of the vehicle (V) and adapted to supply treated air to the right-hand and left-hand portions respectively of the passenger space (H).

3. An installation as claimed in claim 2, characterised in that the respective air inlets (16) of the two housings (12) are connected to a common inlet duct (32) adapted to be supplied with atmospheric or recycled air.

4. An installation as claimed in one of claims 1 to 3, characterised in that the evaporator (48) of the housing (12) is connected to a cooling circuit (68) also housed in the housing (12).

5. An installation as claimed in one of claims 1 to 4, characterised in that the air inlet (14) of the housing (12) is provided with a rapid connector (42) for its connection to an air inlet duct (40) and in that the air outlet(s) (52, 54) is/are each provided with a rapid connector (56, 58) for its/their connection to the distribution ducts (60, 64).

6. An installation as claimed in one of claims 1 to 5, characterised in that the distribution ducts are formed at least partially by hollow members of the framework of the vehicle (V), which in particular include the side members (18).

7. An installation as claimed in claim 6, characterised in that the housing (12) of the air treatment means comprises a single air outlet (16) connected to a side member (18).

8. An installation as claimed in claim 6, characterised in that the housing (12) of the air treatment means comprises two air outlets (52, 54), one (52) connected to a duct (60) leading to distribution outlets (62) disposed on the dashboard (B) and the other (54) leading to a duct (64) connected to a side member (18).

## Patentansprüche

1. Einrichtung zur Beheizung-Klimatisierung des Fahrgastraums eines Fahrzeugs mit Aufbereitungsmitteln, die geeignet sind, - warme oder klimatisierte - aufbereitete Luft zu erzeugen, und Kanälen, die mit den Aufbereitungsmitteln verbunden sind, um die aufbereitete Luft zu Verteilungsmündungen zu transportieren, die im Fahrgastraum verteilt sind, dadurch gekennzeichnet, daß die Aufbereitungsmittel zumindest ein abnehmbares Gehäuse (12) umfassen, das entweder vertikal von unterhalb des Bodens (S) des Fahrzeugs oder horizontal von der Seite auf die Art einer Schublade montiert wird und Schnellverbindungsmittel (30) aufweist, wobei das genannte abnehmbare Gehäuse (12) einen Lufteinlaß (14), gegebenenfalls einen Verdampfer (48), eine Heizung (50) und zumindest einen Luftauslaß (16, 52, 54) umfaßt.

2. Einrichtung nach Anspruch 1, dadurch gekennzeichnet, daß sie zwei abnehmbare Gehäuse (12) umfaßt, die an der rechten bzw. an der linken Seite des Fahrzeugs (V) angeordnet sind und dafür sorgen, daß aufbereitete Luft in den rechten bzw. in den linken Teil des Fahrgastraums (H) gesendet wird.

3. Einrichtung nach Anspruch 2, dadurch gekennzeichnet, daß die jeweiligen Lufteinlässe (16) der zwei Gehäuse (12) mit einem gemeinsamen Zufuhrkanal (32) verbunden sind, der geeignet ist, mit Außenluft oder mit im Kreislauf zurückgeführter Luft gespeist zu werden.

4. Einrichtung nach einem der Ansprüche 1 bis 3, dadurch gekennzeichnet, daß der Verdampfer (48) des Gehäuses (12) mit einem Kühlkreis (68) verbunden ist, der ebenfalls in dem Gehäuse (12) untergebracht ist.

5. Einrichtung nach einem der Ansprüche 1 bis 4, dadurch gekennzeichnet, daß der Lufteinlaß (14) des Gehäuses (12) mit einer Schnellkupplung (42) versehen ist, um ihn mit einem Luftzufuhrkanal (40) zu verbinden, und der Luftauslaß bzw. die Luftauslässe (52, 54) jeweils mit einer Schnellkupplung (56, 58) versehen ist (sind), um ihn (sie) mit den Verteilungskanälen (60, 64) zu verbinden.

6. Einrichtung nach einem der Ansprüche 1 bis 5, dadurch gekennzeichnet, daß die Verteilungskanäle zumindest teilweise durch hohle Elemente des Rahmens des Fahrzeugs (V) gebildet werden, die insbesondere Längsträger (18) umfassen.

7. Einrichtung nach Anspruch 6, dadurch gekennzeichnet, daß das Gehäuse (12) der Luftaufbereitungsmittel einen einzigen Luftauslaß (16) aufweist, der mit einem Längsträger (18) verbunden ist.

8. Einrichtung nach Anspruch 6, dadurch gekennzeichnet, daß das Gehäuse (12) der Luftaufbereitungsmittel zwei Luftauslässe (52, 54) aufweist, wobei der eine (52) mit einem Kanal (60) verbunden ist, der zu Verteilungsmündungen (62) führt, die unter dem Armaturenbrett (B) vorgesehen sind, und der andere (54) zu einem Kanal (64) führt, der mit einem Längsträger (18) verbunden ist.
